# FASCICULE DE BREVET EUROPEEN

(11) **EP 3 571 552 B1**
(45) Date de publication et mention de la délivrance du brevet: **10.03.2021**
(21) Numéro de dépôt: 18702422.9
(22) Date de dépôt: 16.01.2018
(51) Int. Cl.: G04R 60/14, G04G 9/00

(54) **PIÈCE D'HORLOGERIE MODULAIRE DOTÉE DE MOYENS DE COMMUNICATION AVEC UN APPAREIL ÉLECTRONIQUE TIERS**
MODULARES UHRTEIL MIT MITTEL ZUR KOMMUNIKATION MIT EINEM DRITTEN ELEKTRONISCHEN GERÄT
MODULAR WATCH PIECE WITH MEANS OF COMMUNICATION WITH A THIRD-PART ELECTRONIC DEVICE

(30) Priorité: 17.01.2017 CH 572017
(43) Date de publication de la demande: 27.11.2019
(73) Titulaire: Conex Watches SA, 2400 Le Locle (CH)
(72) Inventeur: MOJON, Jean-François, 2208 Les Hauts-Geneveys (CH); CLEMENT, Xavier, 25390 Fournet-Louisans (FR); CHAMBARAUD,Théo, 25650 Gilley (FR); FINAZZI, Pierre-André, 2300 La Chaux-de-Fonds (CH)
(74) Mandataire: e-Patent SA
(86) Numéro de dépôt international: PCT/EP2018/050990
(87) Numéro de publication internationale: WO 2018/134191

(56) Documents cités:
- EP-A1- 1 220 062
- EP-A2- 3 002 644
- US-A1- 2015 268 638

## Description

### Domaine technique

La présente invention se rapporte au domaine de l'horlogerie. Elle concerne, plus particulièrement, une pièce d'horlogerie comportant une boîte et, logé dans la boîte, un mouvement mécanique destiné à entraîner des moyens d'affichage pour fournir une information temporelle. La pièce d'horlogerie comporte en outre, logé dans ladite boîte, un module amovible susceptible d'être assemblé sur le mouvement et respectivement désassemblé du mouvement. La pièce d'horlogerie comporte encore des moyens de communication sans fil agencés pour transmettre des informations avec un appareil électronique tiers, par exemple de type smartphone.

### Etat de la technique

Le domaine des montres connectées est actuellement en pleine expansion. On connait d'une part des montres complètement électroniques, qui se rapprochent d'ordinateurs de poignet, capables de communiquer avec des appareils électroniques tiers, extérieurs, de type smartphone. Ces montres sont dotées d'un affichage digital et permettent d'afficher quasiment n'importe quelle information que peut transmettre le téléphone. Par exemple, la montre peut afficher des rendez-vous, des adresses, des images contenues dans le téléphone ou indiquer le mode d'utilisation du téléphone. On peut également envoyer des instructions au téléphone depuis la montre, par exemple pour déclencher un appel ou pour commander un lecteur de musique.

Ces montres présentent une esthétique particulière, que certains utilisateurs peuvent parfois considérer comme manquant de raffinement à comparer avec des montres mécaniques, qui conservent une image de luxe.

Plus récemment, certaines marques horlogères ont proposé des montres mécaniques, offrant des fonctions connectées. Celles-ci permettent d'afficher certaines informations échangées avec un smartphone. Ces affichages peuvent être digitaux, mais également analogiques. Cependant, l'intégration de composants électroniques dans le mouvement horloger condamne de telles montres à une forme d'obsolescence programmée, qui n'est pas compatible avec une montre intégrant un mouvement de valeur.

Les demandes de brevet EP1220062A1 et US2015/0268638A1 présentent des montres de ce type, comportant des organes d'affichage analogique dont au moins l'un peut être entrainé pour afficher une information horaire dans un mode de fonctionnement standard, ou une information d'une autre nature à partir de signaux fournis par un module de communication dans un mode de fonctionnement spécifique.

Certains explorent la possibilité de loger la partie électronique de la montre, voire un affichage, dans le bracelet de la montre, afin de conserver une montre mécanique conventionnelle ou peu modifiée et ainsi éviter les désagréments liés au vieillissement des composants électroniques ou des logiciels. Il peut alors suffire de changer le bracelet pour obvier ce problème de vieillissement.

La demande de brevet EP3002644A2 propose d'insérer un dispositif électronique indépendant à l'intérieur de la boite d'une montre mécanique conventionnelle, ce dispositif électronique comportant un module de communication destiné à recevoir des signaux d'un smartphone proche et émettre des vibrations ou des sons en réponse à la réception de signaux adaptés.

D'autres, imaginant une approche marketing plutôt que technique, ont proposé de remplacer sous certaines conditions, une montre hybride mécanique/électronique par une montre purement mécanique lorsque la première serait devenue obsolète.

On voit donc bien que l'introduction des montres mécaniques dans le domaine des montres connectées ou smartwatches, induit des challenges délicats à relever et que les solutions actuelles peinent à proposer des solutions vraiment efficaces.

La présente invention a pour but de proposer une solution originale, exempte des inconvénients susmentionnés, pour offrir une montre mécanique dotée de fonctions dites connectées, c'est-à-dire permettant de communiquer avec un appareil tiers.

### Divulgation de l'invention

De façon plus précise, l'invention concerne une pièce d'horlogerie telle que mentionnée dans les revendications.

### Brève description des dessins

D'autres détails de l'invention apparaîtront plus clairement à la lecture de la description qui suit, faite en référence au dessin annexé dans lequel :
- la figure 1 montre une partie d'une pièce d'horlogerie selon l'invention, sans sa boîte,
- la figure 2 montre les éléments de la figure 1, le module étant dissocié du mouvement horloger,
- la figure 3 est une vue en coupe d'un mouvement et d'un module d'une pièce d'horlogerie selon l'invention, et
- la figure 4 est également une vue en coupe similaire à la figure 3, sans le module.

### Mode de réalisation de l'invention

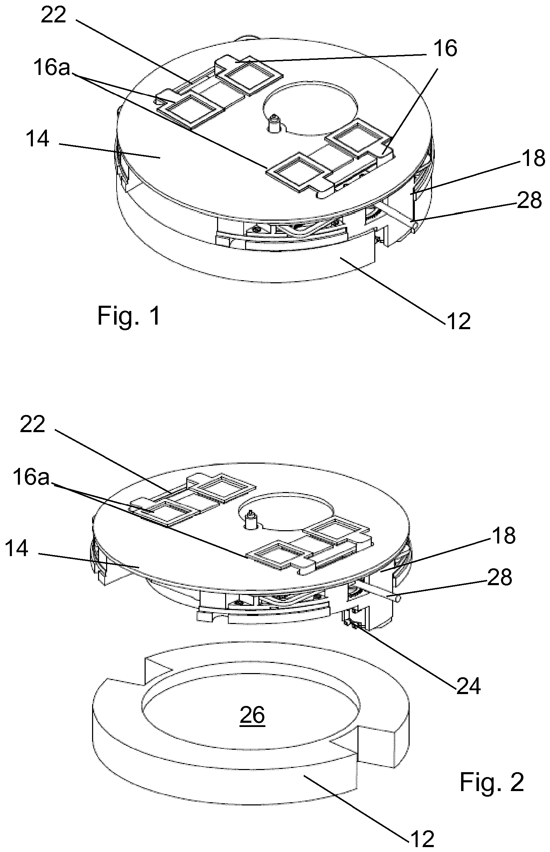

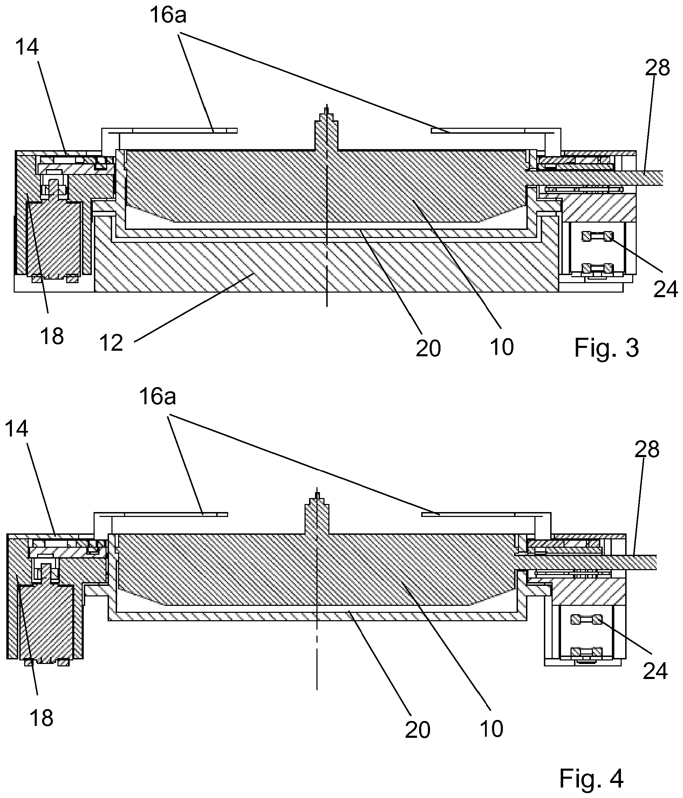

On a représenté sur la figure 1, les éléments principaux d'une pièce d'horlogerie selon l'invention. Pour une meilleure visibilité, la boîte n'est pas représentée et on peut ainsi voir assemblés un mouvement 10 mécanique destiné à entraîner des moyens d'affichage (non représentés) pour fournir une information temporelle, et un module 12 amovible. Ce module 12 est susceptible d'être assemblé au, respectivement désassemblé du mouvement 10, comme on le comprendra ci-après. Sur les figures 1 et 3, le module 12 est assemblé au mouvement 10 et, sur les figures 2 et 4, le mouvement 10 est séparé du module 12. Le module 12 est de préférence disposé sur la face inférieure du mouvement 10, c'est-à-dire du côté destiné à être au contact du poignet d'un utilisateur. Il est ainsi relativement aisé d'accéder au module 12 depuis le fond de la boîte, pour le désassembler du mouvement 10.

Le mouvement 10 est avantageusement un mouvement mécanique, qui peut être de n'importe quelle nature, intégrant des complications mécaniques, des degrés de finition haut de gamme, aux choix du fabricant ou du client. De préférence et selon le mode de réalisation proposé, les moyens d'affichage sont de type analogique, tels que des aiguilles, disposés au centre du mouvement 10. Préférablement, ils laissent libre certaines parties du cadran 14 pour permettre de disposer d'autres affichages, comme on le comprendra ci-après. On peut réaliser une découpe dans le cadran 14 pour rendre visible le balancier du mouvement 10, pour mieux identifier que le mouvement 10 est mécanique.

La pièce d'horlogerie comprend des moyens d'affichage supplémentaires 16 analogiques, montés directement ou indirectement sur le mouvement 10 et destinés à être entraînés par une prise de force spécifique, alimentée par une source d'énergie indépendante cinématiquement du mouvement 10 mécanique. En d'autres termes, les moyens d'affichage supplémentaires 16 sont agencés sur le mouvement 10, mais l'énergie qui les entraîne n'est pas prise dans le mouvement 10. Dans le mode de réalisation proposé, il n'y a pas de liaison cinématique entre les moyens d'affichage supplémentaires 16 et le mouvement 10 et ils ne sont pas non plus commandés par le mouvement 10 ou par un organe situé dans le mouvement 10.

Plus particulièrement, dans l'exemple illustré, les moyens d'affichage supplémentaires 16 sont formés par au moins un index de type linéaire rétrograde apte à être déplacé en regard d'indications disposées linéairement. Cet index peut prendre la forme d'un cadre 16a, destiné à se superposer à des indications figurant sur le cadran 14 de la pièce d'horlogerie, l'indication visible à l'intérieur du cadre 16a étant celle désignée par l'index.

En l'espèce, la pièce d'horlogerie comporte deux index, mobiles selon deux trajectoires parallèles. Ils sont disposés symétriquement par rapport au centre du mouvement 10. D'autres dispositions sont bien entendu possibles.

De manière avantageuse, les moyens d'affichage supplémentaires 16 sont rapportés sur le mouvement 10. Chaque index est monté sur un bâti 18 assemblé sur le mouvement 10, directement ou éventuellement par l'intermédiaire d'un cercle d'encageage 20. Ce bâti 18 porte un moteur, de type électrique, susceptible d'entraîner l'index, via une chaine cinématique qui n'a pas besoin d'être décrite en détails. Le bâti 18 porte des moyens de guidage, qui permettent de définir les positions extrêmes de l'index. Ces moyens de guidage sont typiquement une crémaillère avec laquelle engrène un pignon qui entraîne l'index.

Dans le mode de réalisation préféré illustré au dessin, chaque index est monté sur son propre bâti 18, les différents bâtis 18 étant chacun assemblés sur le cercle d'encageage 20.

Afin de pouvoir adapter les moyens d'affichage supplémentaires 16 sur des mouvements de taille ou de forme variables, le mouvement 10 est disposé dans le cercle d'encageage 20, comprenant une ouverture centrale dont la forme est adaptée aux dimensions du mouvement 10. L'extérieur du cercle d'encageage 20 est conformé de manière à adapter facilement chaque bâti 18 des moyens d'affichage supplémentaires 16. Ainsi, chaque bâti 18 est essentiellement positionné à l'extérieur du mouvement 10, c'est-à-dire au-delà du périmètre du mouvement 10, dans le plan de ce dernier. Il en est de même pour chaque moteur porté par le bâti 18, ledit moteur est disposé à la périphérie du mouvement 10, au moins partiellement dans son épaisseur. Les moyens de guidage des index sont aussi situés à la périphérie du mouvement 10. Toutefois, les index sont déportés et viennent en superposition du mouvement 10. Ils sont mobiles au travers de rainures 22 ménagées dans le cadran 14 de la pièce d'horlogerie.

De manière avantageuse, l'un des bâtis 18 portant les moyens d'affichage supplémentaires 16, est conformé de manière à permettre le passage de la tige de remontoir et de réglage 28 du mouvement 10. Pour ce faire, le bâti 18 comporte un volume libre, formant une tranchée à l'intérieur de laquelle peut passer la tige de remontoir 28.

Le module 12 comporte un microcontrôleur électronique programmable relié à des premiers connecteurs non visibles, coopérant, lorsque le module 12 est assemblé au mouvement 10 de base, avec des deuxièmes connecteurs 24 connectés aux moyens d'affichage supplémentaires 16. Selon l'exemple, les deuxièmes connecteurs 24 sont montés sur les bâtis 18 des moyens d'affichage supplémentaires 16 et permettent d'alimenter et de commander le moteur, pour positionner les index. De préférence, la source d'énergie permettant d'alimenter les moteurs est disposée dans le module 12, par exemple en la forme d'une batterie 26. Celle-ci est reliée électriquement aux moteurs par le biais des connecteurs. Elle alimente également le microcontrôleur électronique.

Le module 12 comporte des moyens de communication sans fil agencés pour transmettre des informations entre le microcontrôleur électronique et un appareil tiers de type smartphone.

Le microcontrôleur et les moyens de communication sont agencés de manière à gérer des informations et des signaux venant de l'appareil tiers ou allant vers l'appareil tiers.

Ainsi, le microcontrôleur électronique est programmé pour commander les moyens d'affichage supplémentaires 16 en fonction des informations reçues de l'appareil tiers ou à transmettre audit appareil tiers. Notamment, en réponse à une information reçue de l'appareil tiers, le microcontrôleur va envoyer un signal de commande aux moteurs des moyens d'affichage, pour les positionner en regard d'une information ad-hoc sur la graduation correspondante.

Par exemple, le cadran 14 peut comporter plusieurs icônes disposées côte à côte selon la trajectoire d'un index et formant une sorte de graduation. Les icônes correspondent par exemple à une identification d'un mode musique, d'un mode courrier et d'un mode neutre. En fonction de l'utilisation du téléphone, celui-ci envoie un signal à la montre et le microcontrôleur électronique le reçoit et envoie une instruction au moteur pour positionner l'index sur l'icône correspondante. On pourra utiliser d'autres icônes, formant une graduation pour chaque index, et ainsi afficher diverses fonctions d'état du téléphone (rappel, rendez-vous, nouveau message ou notification d'un réseau social, appareil photo, état de charge du téléphone...). En outre, les mêmes moyens d'affichage supplémentaires peuvent également permettre d'afficher des informations relatives à l'état du module 12, par exemple à l'état de charge de la batterie 26 du module électronique, ou au nombre de cycles de chargement par exemple.

Ainsi, de manière particulièrement avantageuse, les moyens d'affichage supplémentaires analogiques sont indépendants cinématiquement du mouvement et ils permettent, par l'intermédiaire du microcontrôleur électronique qui les pilote, d'afficher automatiquement une information reçue de l'appareil tiers. Cet affichage est indépendant des moyens d'affichage principaux de la montre, qui continuent à opérer leur fonction et fournir leur information, pendant que les moyens d'affichages supplémentaires fournissent la leur. L'utilisateur n'a pas besoin d'avoir une action motrice sur la pièce d'horlogerie pour recevoir l'information qui lui est transférée automatiquement. Un avertissement sonore ou de type vibreur peut alors être transmis à l'utilisateur pour lui indiquer l'arrivée d'une information.

De manière avantageuse, le microcontrôleur électronique est également programmé pour traiter un signal d'instruction transmis par un bouton de commande dont est dotée la pièce d'horlogerie. Ce bouton de commande peut prendre la forme d'un poussoir monté mobile à la périphérie de la boîte. Selon les commandes à transmettre et les combinaisons de touche à réaliser, on peut utiliser plusieurs boutons de commande. A partir du signal d'instruction reçu, le microcontrôleur électronique pilote les moyens d'affichage supplémentaires 16 et transmet des informations de commande à l'appareil tiers.

Par exemple, en mode musique, un appui court sur le poussoir commande la lecture ou la pause du morceau lu dans le lecteur du téléphone. Un double-appui fait passer au morceau suivant.

En mode téléphone, un appui court sur le poussoir coupe le micro. Un appui long coupe la communication.

On peut proposer une paramétrisation des fonctions et des commandes au moyen d'une application, proposant une interface graphique permettant d'associer un type de commande avec une fonction. L'application, utilisable sur le téléphone ou sur un autre appareil tiers apte à communiquer avec la montre, permet de collecter un jeu de paramètres correspondant à la programmation des fonctions souhaitées par l'utilisateur. Ce jeu de paramètres est transmis au microcontrôleur électronique via les moyens de communication afin de modifier la programmation du microcontrôleur. Naturellement, une liaison filaire pourrait également être possible, en prévoyant un connecteur au niveau de la boîte de la pièce d'horlogerie. On peut ainsi adapter les fonctions du bouton de commande à l'intérieur d'un mode, c'est-à-dire que les moyens d'affichage restent immobiles et indiquent l'icône correspondant au mode, mais l'utilisateur peut modifier les fonctions du bouton de commande. On peut également proposer d'avoir une icône libre, customisable, pour laquelle l'utilisateur peut choisir le mode qui sera attribué à cette icône.

Pour la liaison du module 12 avec le mouvement 10 et/ou avec les deux bâtis 18, on peut proposer différentes solutions permettant également d'indexer leur position relative, afin que les premier et deuxième connecteurs soient au contact l'un de l'autre de manière permanente. On pourra par exemple prévoir de fixer le module 12 au cercle d'encageage 20 lorsque les connecteurs sont positionnés. Des taraudages peuvent ainsi être prédisposés dans le cercle d'encageage 20 pour assurer à la fois le positionnement et la fixation du module 12.

Ainsi, de manière avantageuse, le module 12 comportant la batterie et l'électronique, c'est-à-dire au moins les moyens de communication et le microcontrôleur, forme une entité amovible et interchangeable. Si un élément électronique devient défectueux ou obsolète, il est aisé de retirer le fond de la boîte et de dissocier le module 12 du mouvement 10. On pourra alors remplacer le module 12 et en disposer un doté de nouvelles fonctionnalités ou d'un microcontrôleur plus puissant, tout en conservant la partie mécanique de la montre. On peut également, par ce biais, changer la batterie, dont on sait que le nombre de cycles de charge est limité.

On peut également envisager de remplacer le module 12 par un module postiche, en gardant immobiles les index et ainsi ne conserver qu'une montre mécanique.

Dans une version électromécanique de l'affichage, on peut proposer de positionner les index non pas via un moteur électrique entraînant un pignon, mais par un système de came et palpeur. La came pourrait être située sur le module 12, et sa position angulaire et commandée par le microcontrôleur, en association avec un moteur. Le palpeur est maintenu au contact de la came et définit ainsi la position de l'index. De manière avantageuse, dans une telle configuration, on peut également envisager de remplacer le module 12 électronique par un module 12 mécanique, ou les cames seraient entraînées par une module 12 de type mécanique, indépendant du mouvement 10 et autonome en énergie et pour sa régulation.

Ainsi est proposée une pièce d'horlogerie permettant de combiner les avantages d'une montre mécanique et d'une montre connectée, en limitant les inconvénients liés à l'obsolescence de l'électronique et même en permettant à la pièce d'horlogerie selon l'invention, de continuer à évoluer pour ce qui est de l'électronique, alors que la partie mécanique demeure pérenne.

## Revendications

1. Pièce d'horlogerie comprenant :
- un mouvement (10) destiné à entraîner des premiers moyens d'affichage analogiques pour fournir une indication temporelle,
- un microcontrôleur électronique programmable comportant des moyens de communication aptes à communiquer avec un appareil tiers de type smartphone,
**caractérisée en ce qu'**elle comprend des moyens d'affichage supplémentaires analogiques, indépendants cinématiquement du mouvement et commandés par le microcontrôleur électronique pour afficher automatiquement et indépendamment des premiers moyens d'affichage analogiques, une information reçue de l'appareil tiers.

2. Pièce d'horlogerie selon la revendication 1, comprenant une boîte et, logés dans la boîte, le mouvement (10) et les moyens d'affichage supplémentaires (16),
les moyens d'affichage supplémentaires (16) analogiques étant assemblés au mouvement (10) et destinés à être entraînés par une prise de force spécifique, alimentée par une source d'énergie indépendante cinématiquement du mouvement (10) mécanique,
ladite pièce d'horlogerie comportant en outre, logé dans ladite boîte, un module (12) amovible susceptible d'être assemblé sur, respectivement désassemblé du mouvement (10), ledit module (12) comportant
- le microcontrôleur électronique programmable relié à des premiers connecteurs coopérant, lorsque le module (12) est assemblé au mouvement (10) de base, avec des deuxièmes connecteurs connectés aux moyens d'affichage supplémentaires (16), et
- les moyens de communication sans fil.

3. Pièce d'horlogerie selon la revendication 2, **caractérisée en ce que** lesdits moyens d'affichage supplémentaires (16) sont disposés sur au moins un module (12) d'affichage assemblé au mouvement (10), ledit module (12) d'affichage comprenant un moteur et au moins un index susceptible d'être entraîné par le moteur.

4. Pièce d'horlogerie selon la revendication 3, **caractérisée en ce que** ledit moteur est un moteur électrique, alimenté par l'intermédiaire desdits connecteurs, ladite source d'énergie étant disposée dans le module (12).

5. Pièce d'horlogerie selon la revendication 4, **caractérisée en ce que** ledit moteur est disposé à la périphérie du mouvement (10), au moins partiellement dans son épaisseur.

6. Pièce d'horlogerie selon l'une des revendications précédentes, **caractérisée en ce que** lesdits moyens d'affichage supplémentaires (16) sont de type linéaire rétrograde et sont aptes à être déplacés en regard d'indications disposées linéairement.

7. Pièce d'horlogerie selon la revendication 6, **caractérisée en ce que** lesdits moyens d'affichage supplémentaires (16) sont mobiles entre deux positions extrêmes, selon des moyens de guidage situés à la périphérie du mouvement (10).

8. Pièce d'horlogerie selon l'une des revendications précédentes, **caractérisée en ce qu'**elle comporte au moins un bouton de commande pour transmettre des instructions au microcontrôleur et piloter lesdits moyens d'affichage supplémentaires (16) et transmettre des informations de commande à l'appareil tiers.

9. Pièce d'horlogerie selon l'une des revendications précédentes, **caractérisée en ce que** les moyens d'affichage supplémentaires (16) sont rapportés sur le mouvement (10).

10. Pièce d'horlogerie selon la revendication 9, **caractérisée en ce que** les moyens d'affichage supplémentaires (16) sont montés sur un bâti (18) assemblé sur le mouvement (10), directement ou par l'intermédiaire d'un cercle d'encageage (20).

## Patentansprüche

1. Uhr, die enthält:
- ein Werk (10), das dazu bestimmt ist, erste analoge Anzeigeeinrichtungen anzutreiben, um eine Zeitangabe zu liefern,
- einen programmierbaren elektronischen Mikrocontroller, der Kommunikationseinrichtungen aufweist, die mit einem Drittgerät der Art Smartphone kommunizieren können,
**dadurch gekennzeichnet, dass** sie zusätzliche analoge Anzeigeeinrichtungen enthält, die kinematisch vom Werk unabhängig sind und vom elektronischen Mikrocontroller gesteuert werden, um automatisch und unabhängig von den ersten analogen Anzeigeeinrichtungen eine vom Drittgerät empfangene Information anzuzeigen.

2. Uhr nach Anspruch 1, die ein Gehäuse und im Gehäuse untergebracht das Werk (10) und die zusätzlichen Anzeigeeinrichtungen (16) enthält,
wobei die zusätzlichen analogen Anzeigeeinrichtungen (16) mit dem Werk (10) zusammengefügt werden und dazu bestimmt sind, von einer spezifischen Zapfwelle angetrieben zu werden, die von einer kinematisch vom mechanischen Werk (10) unabhängigen Energiequelle versorgt wird,
wobei die Uhr außerdem im Gehäuse untergebracht ein entfernbares Modul (12) aufweist, das mit dem Werk (10) zusammengefügt bzw. davon abgenommen werden kann, wobei das Modul (12) aufweist
- den programmierbaren elektronischen Mikrocontroller verbunden mit ersten Verbindern, die, wenn das Modul (12) mit dem Basiswerk (10) zusammengefügt ist, mit zweiten Verbindern zusammenwirken, die mit den zusätzlichen Anzeigeeinrichtungen (16) verbunden sind, und
- die drahtlosen Kommunikationseinrichtungen.

3. Uhr nach Anspruch 2, **dadurch gekennzeichnet, dass** die zusätzlichen Anzeigeeinrichtungen (16) auf mindestens einem mit dem Werk (10) zusammengefügten Anzeigemodul (12) angeordnet sind, wobei das Anzeigemodul (12) einen Motor und mindestens einen Zeiger enthält, der vom Motor angetrieben werden kann.

4. Uhr nach Anspruch 3, **dadurch gekennzeichnet, dass** der Motor ein Elektromotor ist, der mittels der Verbinder versorgt wird, wobei die Energiequelle im Modul (12) angeordnet ist.

5. Uhr nach Anspruch 4, **dadurch gekennzeichnet, dass** der Motor am Umfang des Werks (10) zumindest teilweise in seiner Dicke angeordnet ist.

6. Uhr nach einem der vorhergehenden Ansprüche, **dadurch gekennzeichnet, dass** die zusätzlichen Anzeigeeinrichtungen (16) von der linear-retrograden Art sind und gegenüber von linear angeordneten Anzeigen verschoben werden können.

7. Uhr nach Anspruch 6, **dadurch gekennzeichnet, dass** die zusätzlichen Anzeigeeinrichtungen (16) zwischen zwei Endstellungen gemäß am Umfang des Werks (10) befindlichen Führungseinrichtungen beweglich sind.

8. Uhr nach einem der vorhergehenden Ansprüche, **dadurch gekennzeichnet, dass** sie mindestens einen Steuerknopf aufweist, um Anweisungen an den Mikrocontroller zu übertragen und die zusätzlichen Anzeigeeinrichtungen (16) zu steuern und Steuerinformationen an das Drittgerät zu übertragen.

9. Uhr nach einem der vorhergehenden Ansprüche, **dadurch gekennzeichnet, dass** die zusätzlichen Anzeigeeinrichtungen (16) auf das Werk (10) aufgesteckt werden.

10. Uhr nach Anspruch 9, **dadurch gekennzeichnet, dass** die zusätzlichen Anzeigeeinrichtungen (16) auf ein Gestell (18) montiert sind, das direkt oder mittels eines Gehäuserings (20) mit dem Werk (10) zusammengefügt wird.

## Claims

1. Timepiece comprising:
- a movement (10) intended to drive first analogue display means for providing a time indication,
- a programmable electronic microcontroller comprising communication means capable of communicating with a third-party device of smartphone type, **characterized in that** it comprises additional analogue display means, kinematically independent of the movement and controlled by the electronic microcontroller to display, automatically and independently of the first analogue display means, information received from the third-party device.

2. Timepiece according to Claim 1, comprising a case and, housed in the case, the movement (10) and the additional display means (16),
the additional analogue display means (16) being assembled with the movement (10) and intended to be driven by a specific power take-off, powered by an energy source that is kinematically independent of the mechanical movement (10),
said timepiece also comprising, housed in said case, a removable module (12) that can be assembled on, respectively disassembled from, the movement (10), said module (12) comprising
- the programmable electronic microcontroller linked to first connectors cooperating, when the module (12) is assembled with the basic movement (10), with second connectors connected to the additional display means (16), and
- the wireless communication means.

3. Timepiece according to Claim 2, **characterized in that** said additional display means (16) are disposed on at least one display module (12) assembled with the movement (10), said display module (12) comprising a motor and at least one index that can be driven by the motor.

4. Timepiece according to Claim 3, **characterized in that** said motor is an electric motor, powered via said connectors, said energy source being disposed in the module (12).

5. Timepiece according to Claim 4, **characterized in that** said motor is disposed at the periphery of the movement (10), at least partially within its thickness.

6. Timepiece according to one of the preceding claims, **characterized in that** said additional display means (16) are of retrograde linear type and can be displaced in light of indications disposed linearly.

7. Timepiece according to Claim 6, **characterized in that** said additional display means (16) are movable between two extreme positions, according to guiding means situated at the periphery of the movement (10).

8. Timepiece according to one of the preceding claims, **characterized in that** it comprises at least one control button for transmitting instructions to the microcontroller and driving said additional display means (16) and transmitting control information to the third-party device.

9. Timepiece according to one of the preceding claims, **characterized in that** the additional display means (16) are added onto the movement (10).

10. Timepiece according to Claim 9, **characterized in that** the additional display means (16) are mounted on a frame (18) assembled on the movement (10), directly or via a fitting circle (20).
